# EUROPÄISCHE PATENTSCHRIFT

(11) **EP 0 375 666 B1**
(45) Veröffentlichungstag und Bekanntmachung des Hinweises auf die Patenterteilung: **28.04.1993**
(21) Anmeldenummer: 90103489.2
(22) Anmeldetag: 14.02.1987
(51) Int. Cl.: F16L 37/24

(54) **Steckverbindungsvorrichtung mit Verdrehsicherung**
Plug-in connection with a torsional safety
Dispositif de connexion enfichable avec verrouillage de torsion

(30) Priorität: 18.02.1986 DE 3605016
(43) Veröffentlichungstag der Anmeldung: 27.06.1990
(62) Teilanmeldung aus: 87102124.2
(73) Patentinhaber: Armaturenfabrik Hermann Voss GmbH + Co., 51688 Wipperfürth (DE)
(72) Erfinder: Rösch, Volker, Dr., D-4330 Mülheim/Ruhr (DE); Hester, Hilmar, D-5272 Wipperfürth (DE)
(74) Vertreter: Patentanwälte Dr. Solf & Zapf

(56) Entgegenhaltungen:
- CH-A- 240 656
- DE-B- 1 218 374
- GB-A- 302 705
- GB-A- 1 389 048

## Beschreibung

Die vorliegende Erfindung betrifft eine Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse und einem in eine Einstecköffnung einer Anschlußbohrung des Gehäuses mit seinem Steckerschaft einsteckbaren Stecker mit einer Durchgangsbohrung, wobei der Stecker im Gehäuse mittels eines Halteelementes in axialer Richtung gegen Verschieben gehalten und mittels einer zwischen dem Steckerschaft und dem Gehäuse angeordneten Umfangsdichtung abgedichtet ist, wobei das Halteelement von einer auf dem Steckerschaft angeordneten Arretierungshülse gebildet ist, die zusammen mit dem Gehäuse einen Bajonettverschluß bildet.

Eine derartige Steckverbindungsvorrichtung ist einerseits aus der GB-A-2 151 323 sowie andererseits auch aus der US-A-1 333 342 bekannt. Jede dieser bekannten Steckverbindungen besitzt eine Arretierungshülse, die vor dem Einstekken des Steckers verdrehbar sowie auch in axialer Richtung verschiebbar auf dem Steckerschaft sitzt. Erst nach Einstecken des Steckers und Verschließen der Bajonettverbindung ist der Stecker in axialer Richtung gegen Verschieben gesichert. Jedoch läßt sich der Stecker relativ zu dem Gehäuse und der mit diesem verbundenen Arretierungshülse verdrehen, was insbesondere im fortgesetzten Wiederholungsfall zu einer erhöhten Beanspruchung von Dichtungselementen sowie der aus Kunststoff bestehenden Steckverbindungsteile selbst und auch der angeschlossenen Leitung führt, so daß hier die Gefahr von Undichtigkeiten vorhanden ist.

Der vorliegenden Erfindung liegt die Aufgabe zugrunde, die gattungsgemäße Steckverbindungsvorrichtung derart zu verbessern, daß die vorstehenden Nachteile nicht auftreten und eine Festlegung des Steckers im Gehäuse gegen Verdrehung gewährleistet ist, und zwar mit konstruktiv einfachen Mitteln, die insbesondere für die Herstellung in Verbindung mit Kunststoffteilen geeignet sind.

Erfindungsgemäß wird dies dadurch erreicht, daß die Arretierungshülse formschlüssig auf einem Schaftbereich des Steckerschaftes sitzt. Vorzugsweise besitzt hierzu der Steckerschaft einen Schaftbereich mit sechseckigem Außenquerschnitt, und die Arretierungshülse sitzt mit einem entsprechenden Innensechskant auf diesem Schaftbereich des Steckerschaftes. Hierdurch ist ein Formschluß in Umfangsrichtung gebildet. Darüber hinaus ist die Arretierungshülse auf dem Steckerschaft auch gegen Längsverschiebung fixiert.

Durch die Erfindung wird über die Arretierungshülse ein mittelbarer Formschluß zwischen dem Stecker und dem Gehäuse erreicht, so daß der Stecker einerseits in axialer Richtung gegen Verschieben, andererseits aber auch in Umfangsrichtung gegen Verdrehen gesichert ist.

Vorteilhafte Ausgestaltungen der Erfindung sind in den Unteransprüchen enthalten.

Anhand der Zeichnungen wird die Erfindung nunmehr beispielhaft näher erläutert. Es zeigen:
- Fig. 1: in der unteren und oberen Hälfte jeweils eine von zwei sich geringfügig unterscheidenden Ausführungsformen einer erfindungsgemäßen Steckverbindungsvorrichtung im Längsschnitt,
- Fig. 2: einen Querschnitt entlang der Schnittlinie II-II in Fig. 1,
- Fig. 3: einen Längsschnitt durch einen Teil einer erfindungsgemäßen Steckverbindungsvorrichtung und
- Fig. 4: eine Ansicht eines Bereichs der Steckverbindungsvorrichtung in Pfeilrichtung IV gemäß Fig. 1, jedoch ohne Stecker.

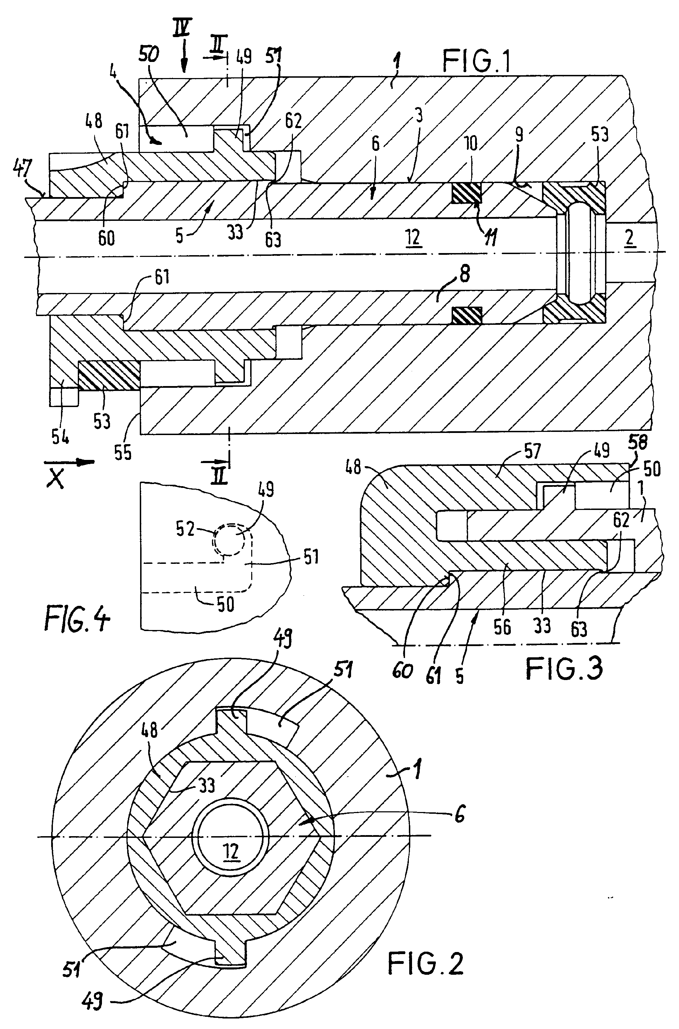

Wie in Fig. 1 dargestellt ist, besteht eine erfindungsgemäße Steckverbindungsvorrichtung aus einem Gehäuse 1, insbesondere dem Gehäuse eines Ventilkörpers. In diesem Gehäuse 1 befinden sich eine oder mehrere Anschlußbohrungen 2, die einen im Durchmesser vergrößerten Aufnahmeabschnitt 3 aufweisen, der in einer Einstecköffnung 4 an der Gehäuseaußenseite endet. Die Steckverbindungsvorrichtung umfaßt weiterhin einen Stecker 5. Dieser Stecker 5 weist einendig einen Steckerschaft 6 und anderendig einen nicht dargestellten Anschlußdorn für eine Druckmittelleitung, z.B. eine Bremsleitung eines pneumatischen Kraftfahrzeug-Bremssystems, auf. Der Steckerschaft 6 ist in den Aufnahmeabschnitt 3 einsteckbar und besitzt einen in Einsteckrichtung, siehe Pfeil X, gesehen vorderen Schaftbereich 8 mit rundem Querschnitt, dessen Außendurchmesser etwa dem Innendurchmesser eines diesem Schaftbereich 8 zugeordneten Führungsabschnittes 9 des Aufnahmeabschnittes 3 entspricht. Auf der Mantelfläche des vorderen Schaftbereichs 8 ist eine Umfangsdichtung aus einem O-Dichtring 10 und einer diesen aufnehmenden Ringnut 11 angeordnet, die die Steckverbindung nach außen abdichtet. Der Stecker 5 besitzt eine Durchgangsbohrung 12, die im eingesteckten Zustand des Steckers 5 gleichachsig zur Anschlußbohrung 2 verläuft. Die Steckverbindungsvorrichtung ist als Kunststoffverbindung ausgebildet, d.h. sowohl das Gehäuse 1 als auch der Stecker 5 bestehen aus Kunststoff. Wesentlich ist, daß bei derartigen Kunststoffverbindungen sichergestellt wird, daß der Stecker 5 im Gehäuse 1 verdrehsicher im eingesteckten Zustand gehalten wird.

Um diese Verdrehsicherung des Steckerschaftes 6 im Gehäuse 1 zu bewirken, besitzt der Steckerschaft 6 - siehe auch Fig. 2 - einen Schaftbereich 33 mit sechseckigem Querschnitt (Außensechskant), auf dem eine Arretierungshülse 48 mit einem entsprechenden Innensechskant formschlüssig sitzt. Dem Schaftbereich 33 ist, in Einsteckrichtung X gesehen, ein im Querschnitt kreisförmiger Schaftabschnitt 47 mit geringerem Außendurchmesser vorgelagert, auf dem ein Abschnitt der Arretierungshülse 48 geführt ist. Am Umfang der Arretierungshülse 48 sind vorzugsweise zwei einander gegenüberliegende, radial abstehende Zapfen 49 ausgebildet. Zum Einführen und zur Aufnahme dieser Zapfen 49 weist das Gehäuse 1, ausgehend von seiner Einstecköffnung 4 in der Wandung des Aufnahmeabschnittes 3 vorzugsweise zwei in Längsrichtung des Gehäuses 1 verlaufende Nuten 50 auf, die an ihren im Gehäuse 1 liegenden Enden einen in Umfangsrichtung sich anschließenden Nutabschnitt 51 aufweisen, wobei die Nutabschnitte 51 gleichsinnig verlaufen. Es entsteht somit in der Aufsicht gesehen ein L-förmiger Kanal (siehe Fig. 4). Am Ende der Nutabschnitte 51 befindet sich in der der Einstecköffnung 4 zugekehrten Nutwandung eine Vertiefung 52, deren Form den Abmessungen der Zapfen 49 angepaßt ist. Die Arretierungshülse 48 mit den Zapfen 49 und die L-förmigen Kanäle bilden eine Art Bajonett-Verschluß zur Fixierung des Steckers 5 im Gehäuse 1, und zwar zur Fixierung gegen Verdrehung sowie gegen axiale Verschiebung.

Zwischen dem Stecker 5 und dem Gehäuse 1 ist ein Federelement 53 angeordnet, gegen dessen Federkraft das Einstecken des Steckers 5 in das Gehäuse 1 erfolgt, und die im eingesteckten Zustand die Zapfen 49 in die Vertiefungen 52 drückt. Das Federelement 53 kann aus einem gummielastischen Pufferelement bestehen, das im Grund des Führungsabschnittes 9 des Gehäuses 1 angeordnet ist, siehe Fig. 1, obere und untere Hälfte, und/oder als gummielastisches Ringelement außerhalb des Gehäuses 1 zwischen einem Ringkragen 54 an der Arretierungshülse 48 und einer Stirnfläche 55 des Gehäuses 1 (siehe Fig. 1, untere Hälfte). Im letzteren Fall bildet das Gummielement auch eine Schmutzabdichtung des Gehäuseinnenraums.

In Fig. 3 ist eine Alternative zu der Ausführungsform gemäß Fig. 1 dargestellt. Hierbei sind die Zapfen 49 an der Außenwandung des Gehäuses 1 und der L-förmige, aus der Nut 50 und dem Nutabschnitt 52 bestehende Kanal in der Arretierungshülse 48 ausgebildet. Hierzu weist die Arretierungshülse 48 einerseits ein in den Aufnahmeabschnitt 3 hineinragendes und auf dem Steckerschaftbereich 33 angeordnetes Hülsenteil 56 sowie andererseits einen hierzu konzentrischen, äußeren, das Gehäuse umfassenden Hülsenteil 57 auf, wobei die beiden Hülsenteile 56, 57 einendig miteinander verbunden sind und die Gehäusewandung zwischen den beiden Hülsenteilen 56 und 57 eingeschlossen wird. Die Nut 50 verläuft dabei entgegen der Einsteckrichtung X des Steckers 5 ausgehend von dem freien Ende 58 des äußeren Hülsenteils 57. Im übrigen sind gleiche Teile wie in den Fig. 1 und 2 mit denselben Bezugsziffern gekennzeichnet.

Wie bereits erwähnt wurde, ist zwischen dem Gehäuse 1 und dem Stecker 5 ein mittelbarer Formschluß über die Arretierungshülse 48 vorhanden. Zu diesem Zweck ist die Arretierungshülse 48 mit dem Innensechskant versehen und auf den Schaftbereich 33, der den entsprechenden Außensechskant aufweist, aufgeschoben und dabei auf diesem in Längsrichtung fixiert, und zwar - gemäß Fig. 1 und 3 - einerseits durch die Anlage einer radialen Stufenfläche 60 der Innenwandung der Arretierungshülse 48 an einer radialen Stufenfläche 61 am Übergang des Steckerschaftes 6 zu dem Schaftbereich 33 sowie andererseits durch einen umlaufenden Haltewulst 62 geringer Höhe am Ende der Innenwandung der Arretierungshülse 48 (in Einsteckrichtung gesehen) unmittelbar hinter dem Schaftbereich 33. Hierbei ist an dessen Übergang zum vorderen Schaftbereich 8 ein Absatz 63 angeformt, der mit dem Haltewulst 62 zusammenwirkt.

Bei den dargestellten Ausführungsbeispielen wird der Stecker 5 mit der auf ihm fixierten Arretierungshülse 48 in das Gehäuse 1 eingesteckt, wobei die Zapfen 49 des Bajonett-Verschlusses zunächst die Nuten 50 durchlaufen. Am Ende der Nuten 50 erfolgt dann eine Verdrehung des Steckers 5 bis zum Anschlag der Zapfen 49 am Ende der Nutabschnitte 51. In dieser Lage kann der Stecker 5 losgelassen werden, wobei er dann aufgrund der entgegen der Einsteckrichtung X wirkenden Federkraft des Federelementes 53 mit Hilfe des Bajonett-Verschlusses lagefixiert wird, da die Zapfen 49 in die Vertiefungen 52 hineingedrückt werden. Somit erfolgt auf einfache Weise eine Sicherung des Steckers 5 im Gehäuse 1 mit denselben Elementen sowohl gegen Verdrehen als auch gegen axiale Verschiebung.

## Patentansprüche

1. Steckverbindungsvorrichtung für Druckmittelleitungen, insbesondere zum Anschluß von Bremsleitungen an einen Bremsventilkörper eines pneumatischen Kraftfahrzeug-Bremssystems, bestehend aus einem Gehäuse (1) und einem in eine Einstecköffnung (4) einer Anschlußbohrung (2) des Gehäuses (1) mit seinem Steckerschaft (6) einsteckbaren Stecker (5) mit einer Durchgangsbohrung (12), wobei der Stecker (5) im Gehäuse (1) mittels eines Halteelementes in axialer Richtung gegen Verschieben gehalten und mittels einer zwischen dem Steckerschaft (6) und dem Gehäuse (1) angeordneten Umfangsdichtung (10) abgedichtet ist, wobei das Halteelement von einer auf dem Steckerschaft (6) angeordneten Arretierungshülse (48) gebildet ist, die zusammen mit dem Gehäuse (1) einen Bajonettverschluß bildet,
**dadurch gekennzeichnet,** daß die Arretierungshülse (48) formschlüssig auf einem Schaftbereich (33) des Steckerschaftes (6) sitzt.

2. Steckverbindungsvorrichtung nach Anspruch 1,
**dadurch gekennzeichnet,** daß die Arretierungshülse (48) einen Innensechskant und der Schaftbereich (33) des Steckerschaftes (6) einen entsprechenden Außensechskant aufweisen.

3. Steckverbindungsvorrichtung nach Anspruch 1 oder 2,
**dadurch gekennzeichnet,** daß die Arretierungshülse (48) auf dem Steckerschaft (6) gegen Längsverschiebung fixiert ist.

4. Steckverbindungsvorrichtung nach einem oder mehreren der Ansprüche 1 bis 3,
**dadurch gekennzeichnet,** daß der Bajonettverschluß aus radial abstehenden, einander diametral gegenüberliegenden Zapfen (49) besteht, die an der Arretierungshülse (48) oder dem Gehäuse (1) ausgebildet sind und jeweils in einem L-förmigen Kanal aus einer randoffenen Nut (50) und einem an diesen anschließenden Nutabschnitt (51) geführt sind, der in dem Gehäuse (1) oder der Arretierungshülse (48) ausgebildet ist.

5. Steckverbindungsvorrichtung nach Anspruch 4,
**dadurch gekennzeichnet,** daß die Nutabschnitte (51) gleichsinnig verlaufen und an ihrem Ende in der der Einstecköffnung (4) zugekehrten Nutwandung eine Vertiefung (52) zur Aufnahme der Zapfen (49) aufweisen.

6. Steckverbindungsvorrichtung nach einem oder mehreren der Ansprüche 1 bis 5,
**dadurch gekennzeichnet,** daß zwischen dem Stecker (5) und dem Gehäuse (1) ein Federelement (53) derart angeordnet ist, daß im eingesteckten Zustand auf den Stecker (5) entgegen der Einsteckrichtung (X) eine Federkraft einwirkt.

## Claims

1. Plug connection device for pressure medium leads, more especially for connecting brake leads to a brake valve member of a motor vehicle pneumatic brake system, consisting of a housing )1) and a plug (5) which it is possible to insert, by means of its plug shaft (6), into an insert opening (4) of a connection hole (2) of the housing (1) by means of a through hole (12), wherein the plug (5) is fixed in the housing (1) against shifting in an axial direction by means of holding members and sealed by means of a peripheral seal (10) located between the plug shaft (6) and the housing (1), wherein the holding member is formed by a stop sleeve (48) which together with the housing (1) forms a bayonet lock, characterised in that the stop sleeve (48) sits form-locking on a shaft region (33) of the plug shaft (5).

2. Plug connection device according to Claim 1, characterised in that the stop sleeve (48) has an internal hexagon and the shaft region (33) of the plug shaft (6) has a corresponding outer hexagon.

3. Plug connection device according to Claim or 2, characterised in that the stop sleeve (48) is fixed against longitudinal shift on the plug shaft.

4. Plug connection device according to one or more of claims 1 to 3, characterised in that the bayonet lock consists of radially distant pins (49) which are diametrically opposite one another and which are guided on the stop sleeve (48) of the housing (1) and are moved in an L-shaped channel consisting of an open-edged groove (50) and a groove section (51) adjacent thereto, which is formed in the housing (1) or the stop sleeve (48).

5. Plug connection device according to Claim 4, characterised in that the groove sections (51) extend in the same direction and at their end, in the groove wall facing the insert opening (4) have a recess (52) to receive the pin (49).

6. Plug connection device according to one or more of Claims 1 to 5, characterised in that a spring member (53) is arranged between the plug (5) and the housing (1) in such a manner that a spring force is exerted on the plug (5) against the direction of insertion (X), when the plug is inserted.

## Revendications

1. Dispositif de connexion enfichable pour des conduites d'agent de pression, en particulier pour brancher des conduites de freinage sur un corps de valve de freinage d'un système de freinage pneumatique d'un véhicule automobile, comprenant un boîtier (1) et une fiche (5) munie d'un perçage traversant (12) et pouvant être introduite, par sa tige (6), dans une ouverture d'introduction (4) d'un perçage de branchement (2) du boîtier (1), la fiche (5) étant immobilisée dans la direction axiale contre un déplacement en translation dans le boîtier (1) par un élément d'arrêt et étant étanchée au moyen d'un joint périphérique (10) disposé entre la tige d'introduction (6) et le boîtier (1), l'élément d'arrêt étant formé par une douille d'arrêt (48) qui est disposée sur la tige d'introduction (6) et qui forme, avec le boîtier (1), un emboîtement à baïonnette, caractérisé en ce que la douille d'arrêt (48) est immobilisée par sa forme, sur une zone de tige (33) de la tige d'introduction (6).

2. Dispositif de connexion enfichable selon la revendication 1, caractérisé en ce que la douille d'arrêt (48) présente un hexagone femelle et la zone de tige (33) de la tige d'introduction (6) un hexagone mâle correspondant.

3. Dispositif de connexion enfichable selon la revendication 1 ou 2, caractérisé en ce que la douille d'arrêt (48) disposée sur la tige d'introduction (6) est immobilisée contre un déplacement en translation longitudinale.

4. Dispositif de connexion enfichable selon une ou plusieurs des revendications 1 à 3, caractérisé en ce que l'emboîtement à baïonnette est constitué de broches diamétralement opposées (49) qui font saillie radialement, qui sont disposées sur la douille d'arrêt (48) ou sur le boîtier (1) et qui sont chacune guidées dans un canal en L pratiqué dans une gorge (50) à bords ouverts et dans une portion de gorge (51) qui prolonge cette dernière et qui est réalisée dans le boîtier (1) ou dans la douille d'arrêt (48).

5. Dispositif de connexion enfichable selon la revendication 4, caractérisé en ce que les portions de gorge (51) sont orientées dans le même sens et comportent, à leur extrémité, dans la paroi de gorge tournée vers l'ouverture d'introduction (4), un renfoncement (52) pour recevoir les broches (49).

6. Dispositif de connexion enfichable selon une ou plusieurs des revendications 1 à 5, caractérisé en ce qu'un élément élastique (53) est disposé entre la fiche (5) et le boîtier (1), de façon que, lorsque la fiche (5) est introduite dans le boîtier (1), une force élastique s'exerce sur la fiche (5) à l'encontre de la direction d'introduction (X).
